# EUROPEAN PATENT APPLICATION

(11) **EP 4 763 598 A1**
(43) Date of publication of application: **24.06.2026**
(21) Application number: 24876919.2
(22) Date of filing: 26.07.2024
(51) Int. Cl.: B60L 58/12, B60K 6/46, B60K 6/52, B60L 9/18, B60L 15/20, B60W 10/08, B60W 10/26, B60W 20/13, B60W 20/15

(54) **VEHICLE CONTROL SYSTEM AND VEHICLE CONTROL METHOD**

(30) Priority: 12.10.2023 JP 2023176616
(71) Applicant: Mitsubishi Jidosha Kogyo Kabushiki Kaisha, Tokyo 108-8410 (JP)
(72) Inventor: TAKAHASHI, Ryota, Tokyo 108-8410 (JP); KOGA, Ryosuke, Tokyo 108-8410 (JP); KAWAI, Kazunori, Tokyo 108-8410 (JP); TAKAHASHI, Naoki, Tokyo 108-8410 (JP); OKAMURA, Yutaro, Tokyo 108-8410 (JP); ISHIHARA, Yuji, Tokyo 108-8410 (JP)
(74) Representative: Vossius & Partner Patentanwälte Rechtsanwälte mbB
(86) International application number: PCT/JP2024/026850
(87) International publication number: WO 2025/079318

(57) **Abstract**

A vehicle control system (20) includes: a superordinate control device (21) including a first arithmetic unit (24) that calculates, based on operation data of a vehicle (1), a first demand torque (T_{D1}) which is a demand torque required for a motor (4), and a first restricting unit (21) that outputs a second demand torque (T_{D2}) obtained by restricting the first demand torque (T_{D1}) within a first range (R1) set based on a state of a battery (10); and a subordinate control device (22) including a second arithmetic unit (27) that calculates an instruction torque of the motor (4) as a first instruction torque (T_{I1}) by incorporating element data of one or more elements on a power transmission path from the motor (4) to a wheel (2) into the second demand torque (T_{D2}), a second restricting unit (28) that calculates a second instruction torque (T_{I2}) obtained by restricting the first instruction torque (T_{D1}) within a second range (R2) set based on the state of the battery (10), and a controlling unit (29) that controls the motor (4) such that the motor (4) outputs the second instruction torque (T_{I2}).

## Description

### [Technical Field]

The present disclosure relates to a vehicle control system of a vehicle provided with a motor and to a vehicle control method for the vehicle.

### [Background Art]

One of conventionally-known vehicle control systems includes, as a control device related to control on a motor that drives a wheel, a superordinate control device that collectively controls all the on-board electronic devices and a subordinate control device that controls an operating state of the motor. For example, PTL 1 discloses a control system including a superordinate control device (superordinate ECU) that calculates a demand torque required for a motor on the basis of vehicle data and a subordinate control device (main motor controller) that calculates an instruction torque to achieve the demand torque on the basis of a signal detected by a rotational speed sensor. In this way, by calculating the demand torque of the motor in the superordinate control device that collectively controls the on-board devices and calculating the instruction torque to be ultimately output to the motor in the subordinate control device, setting of appropriate demand torque and control utilizing the high responsiveness of the motor can be both achieved.

### [Citation List]

### [Patent Literature]

[PTL 1]
WO 2023/013564 A1

### [Summary of Invention]

### [Technical Problem]

The motor for driving the vehicle operates using electric power supplied by an on-board battery, but this battery functions as a power source for electric and electronic devices (electronics devices) except for the motor as well as the power source of the motor. For a battery, an output in a range (tolerance output ranges on the positive side and the negative side) in which the battery can be normally used is set. If an output deviating from this range is demanded, the battery may have a malfunction such as a temperature rise and heat generation. Although a configuration in which an output required for the battery is calculated by a signal control device is less likely to cause the above malfunction, a control system including a superordinate control device and a subordinate control device as in aforementioned PTL 1 may cause the above malfunction. The above problem may occur both when the output is extracted from the battery (i.e., when the battery is discharged) and when the battery is charged with electric power (i.e., when the motor is regenerating).

The present disclosure has been devised in view of such a problem and one of objects thereof is to appropriately control a motor while protecting a battery in a vehicle control system and a vehicle control method for a vehicle provided with a superordinate control device and a subordinate control device. The object of the present disclosure should not be limited to this object and another object of the present disclosure is to achieve actions and effects which are derived from each configuration described in the following "Description of Embodiments" and which conventional techniques do not attain.

### [Solution to Problem]

The disclosed invention can be embodied in the following aspects (application examples) and solves at least a part of the above problem. The aspects of aspect 2 and thereafter are each optionally and appropriately selected and can be omitted. This means that the aspects of aspect 2 and thereafter do not disclose an essential aspect or configuration.

Aspect 1. The disclosed vehicle control system is for a vehicle including a battery and a motor that drives a wheel using electric power of the battery, and includes a superordinate control device and a subordinate control device. The superordinate control device includes a first arithmetic unit that calculates a first demand torque based on operation data of the vehicle, the first demand torque being a demand torque required for the motor, and a first restricting unit that outputs a second demand torque obtained by restricting the first demand torque within a first range set based on a state of the battery. The subordinate control device includes a second arithmetic unit that calculates an instruction torque of the motor as a first instruction torque by incorporating element data of one or more elements on a power transmission path from the motor to the wheel into the second demand torque, a second restricting unit that calculates a second instruction torque obtained by restricting the first instruction torque within a second range set based on the state of the battery, and a controlling unit that controls the motor such that the motor outputs the second instruction torque.

Aspect 2. In an aspect containing above aspect 1, it is preferable that the vehicle further includes a differential mechanism that applies a torque difference to a left wheel and a right wheel serving as two of the wheels, and a left motor and a right motor that is each connected to the differential mechanism and that each serves as the motor. With this structure, it is preferable that the second arithmetic unit calculates, as the first instruction torque, a left instruction torque of the left motor and a right instruction torque of the right motor, and the second restricting unit calculates the second instruction torque using a product of the left instruction torque and a rotational speed of the left motor and a product of the right instruction torque and a rotational speed of the right motor.

Aspect 3. In an aspect containing above aspect 1, it is preferable that the vehicle further includes a generator that supplies generated electric power to the battery. With this structure, it is preferable that the superordinate control device further includes a power-generation controlling unit that causes the generator to generate electric power according to the second demand torque, the second arithmetic unit executes, when a slip of the wheel is detected as the element data, traction control that reduces the second demand torque, and the subordinate control device transmits an execution state of the traction control and the second instruction torque to the superordinate control device.

Aspect 4. In an aspect containing above aspect 3, it is preferable that the power-generation controlling unit causes, when the traction control is executed, the generator to generate electric power according to the second instruction torque.

Aspect 5. In an aspect containing above aspect 1, it is preferable that the motor is a first motor that drives a first one of a front wheel and a rear wheel of the vehicle. With this structure, it is preferable that the vehicle further includes a second motor that is different from the first motor controlled by the subordinate control device and that drives a second one of the front wheel and the rear wheel using the electric power of the battery and also the vehicle control system further includes a different subordinate control device that controls the second motor. In this case, it is preferable that the first arithmetic unit calculates, based on the operation data, the first demand torque and a third demand torque, the third demand torque being a demand torque required for the second motor, and the first restricting unit outputs a fourth demand torque obtained by restricting the third instruction torque within a third range set based on the state of the battery. It is preferable that the different subordinate control device controls the second motor such that the second motor outputs the fourth demand torque.

Aspect 6. The disclosed vehicle control method is for a vehicle including a battery, a motor that drives a wheel using electric power of the battery, a superordinate control device that calculates a demand torque required for the motor, and a subordinate control device that calculates an instruction torque of the motor. The superordinate control device calculates a first demand torque based on operation data of the vehicle, the first demand torque being the demand torque required for the motor, and outputs a second demand torque obtained by restricting the first demand torque within a first range set based on a state of the battery. The subordinate control device calculates an instruction torque of the motor as a first instruction torque by incorporating element data of one or more elements on a power transmission path from the motor to the wheel into the second demand torque, calculates a second instruction torque obtained by restricting the first instruction torque within a second range set based on the state of the battery, and controls the motor such that the motor outputs the second instruction torque.

### [Advantageous Effects of Invention]

According to the vehicle control system and the vehicle control method disclosed herein, the first demand torque calculated based on the operation data is restricted within the first range set based on a state of the battery and is output as the second demand torque in the superordinate control device. Thereby, in the subordinate control device, the first instruction torque serving as the instruction toque of the motor is calculated based on the second demand torque calculated by incorporating the state of the battery, so that the motor can be appropriately controlled while the battery is protected. In addition, since, in the subordinate control device, the first instruction torque is restricted within the second range set based on the state of the battery and is calculated as the second instruction toque, the demand for output deviating from the tolerance output range on the battery can be suppressed, so that the battery can be protected.

### [Brief Description of Drawings]

[FIG. 1]

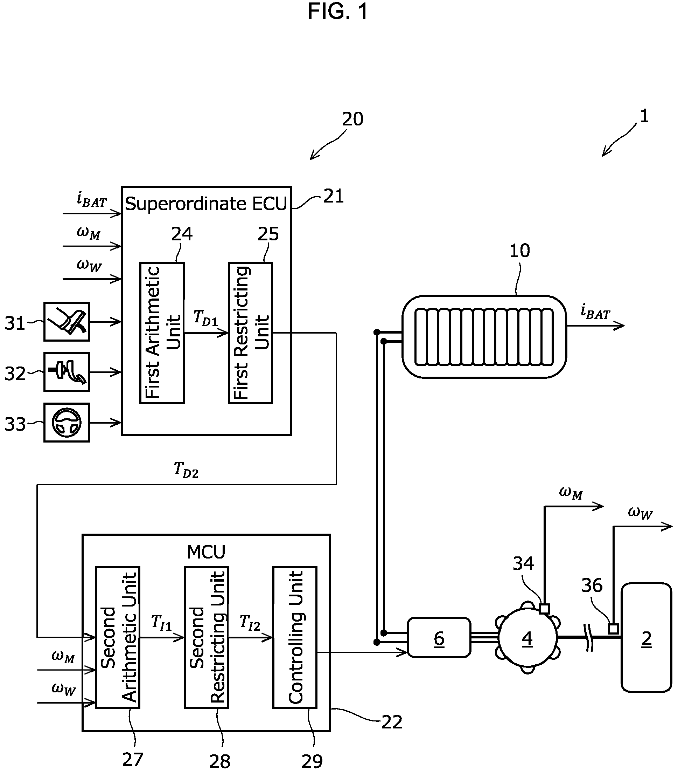

   FIG. 1 is a block diagram showing a configuration of a control system according to a first embodiment in conjunction with a control logic executed in the control system.
[FIG.2]

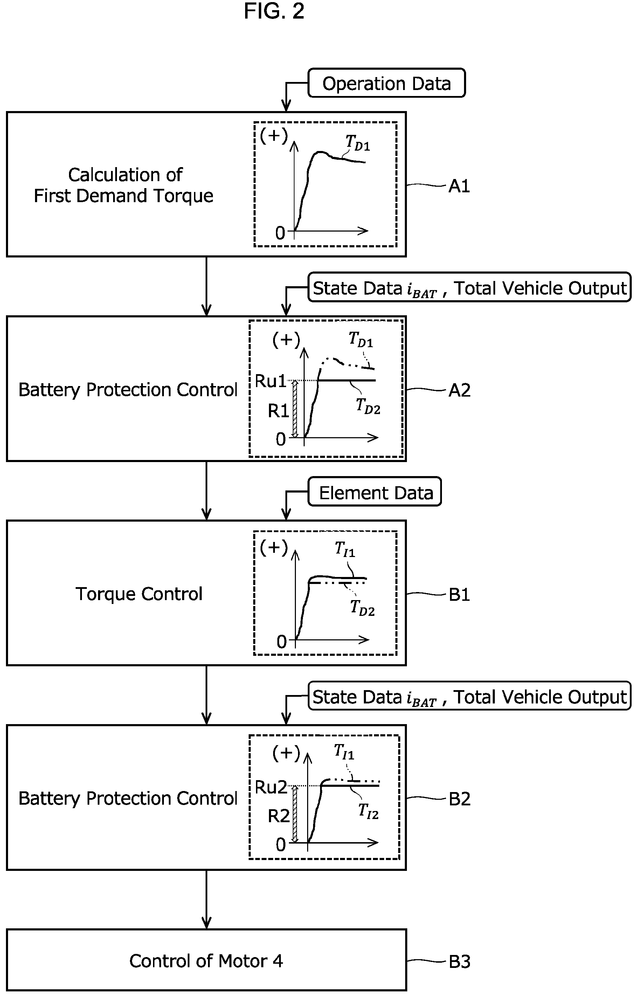

   FIG. 2 is a block diagram showing a specific example of the control logic (control method) executed in the control system of FIG. 1.
[FIG. 3]

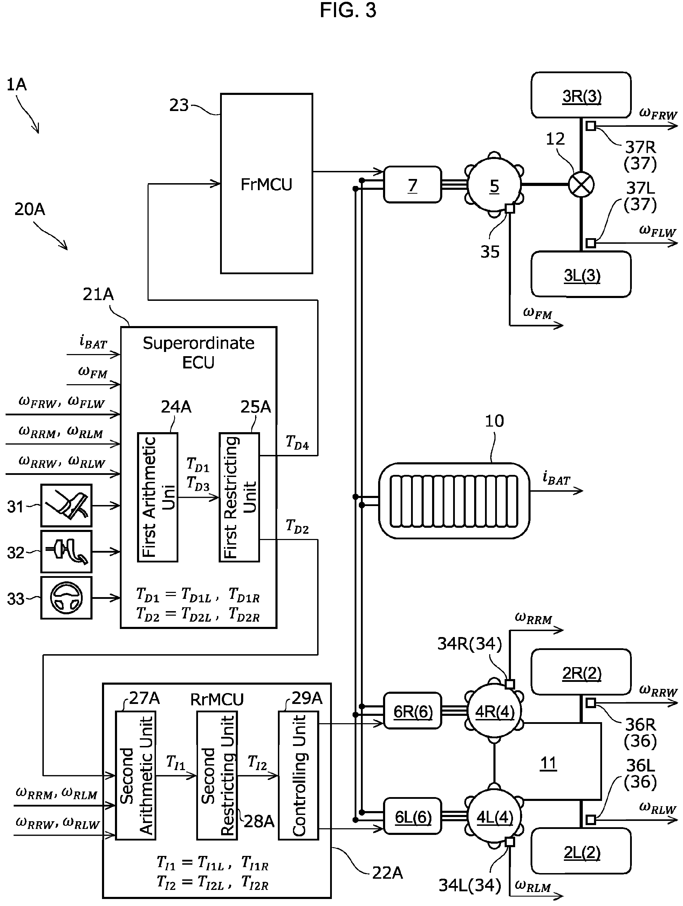

   FIG. 3 is a block diagram showing a configuration of a control system according to a second embodiment in conjunction with a control logic executed in the control system.
[FIG. 4]

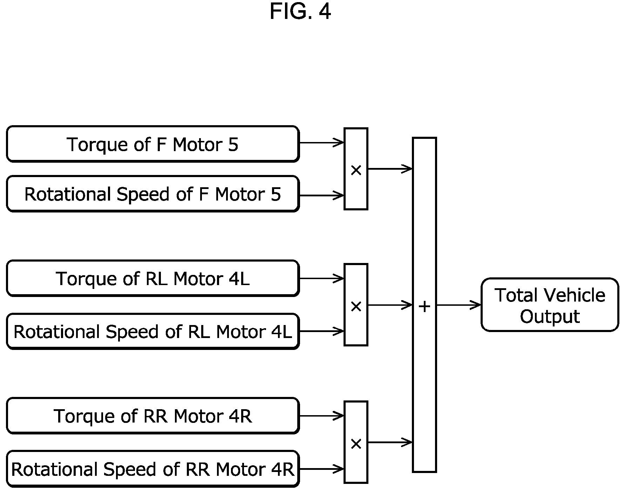

   FIG. 4 is a diagram showing an example of an arithmetic logic for a total vehicle output executed in the control system of FIG. 3.
[FIG. 5]

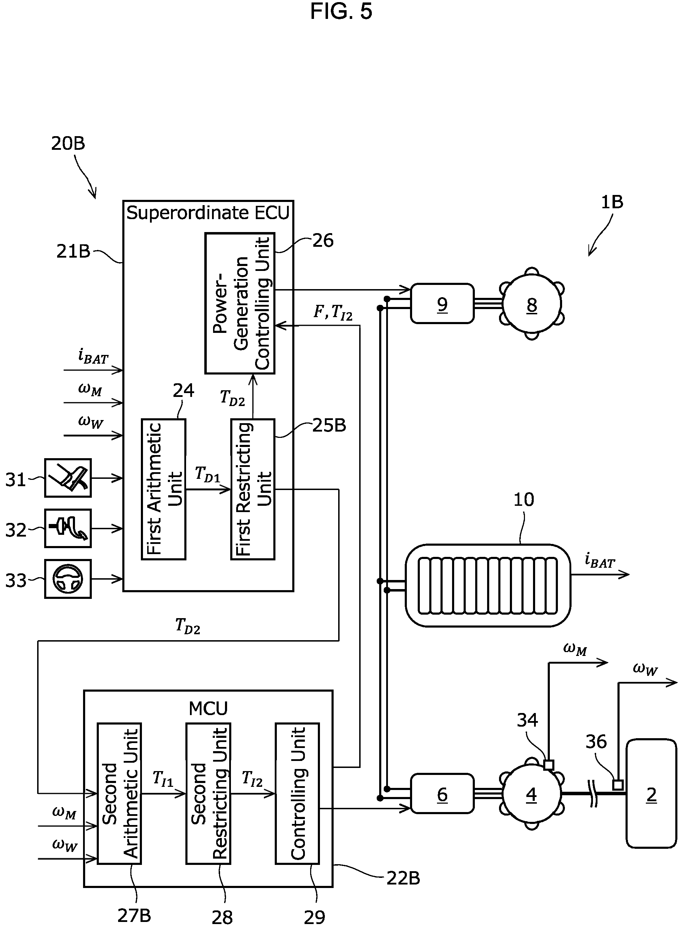

   FIG. 5 is a block diagram showing a configuration of a control system according to a third embodiment in conjunction with a control logic executed in the control system.

### [Description of Embodiments]

With reference to the drawings, a vehicle control system and a vehicle control method according to the embodiments will now be described. The following embodiments are merely illustrative and are not intended to exclude the application of various modifications and techniques not explicitly described in the following embodiments. Each configuration of the embodiments can be variously modified and implemented without departing from the gist thereof. Also, each configuration can be selected or omitted according to the requirement, or can be combined appropriately.

In the following description, the vehicle control systems (hereinafter, simply referred to as "control systems") 20, 20A, and 20B according to three embodiments are shown. Each of the control systems 20, 20A, and 20B is for controlling a motor that drives a wheel (drive wheel). The control system 20 of a first embodiment is a basic configuration of the present disclosure, and is applicable to any vehicle including a motor that drives a wheel.

In addition, the control system 20A of a second embodiment is applied to a vehicle including: a differential mechanism that applies a torque difference to left and right wheels; and two motors connected to the differential mechanism (i.e., a vehicle having a two-input two-output mechanism). The control system 20B of a third embodiment is applied to a vehicle including a motor and a generator. In the following description, the reference numbers like those of the control system 20 designate the same elements and parts, and description of the configuration and the effects thereof will be omitted. Further, the components corresponding to the configurations described in the control system 20 are represented by attaching the letter A or B at the end of the reference numbers of the control system 20, and detailed explanation thereof is omitted.

### 1. First Embodiment

### 1-1. Configuration of Vehicle

FIG. 1 is a block diagram illustrating a configuration of the control system 20 of the first embodiment in conjunction with a control logic implemented in the control system 20. The control system 20 is applied to a vehicle 1 provided with a motor (electric motor) 4 that drives at least a wheel 2. The control system 20 has a function of controlling the motor 4, and includes a superordinate control device 21 (hereinafter, referred to as "superordinate ECU 21") and a subordinate control device 22 (hereinafter, referred to as "MCU 22"). Examples of the type of vehicle that adopts the control system 20 is an electric vehicle and a hybrid vehicle. It is sufficient that the wheel 2 at least serves as a drive wheel for causing the vehicle 1 to travel, and its positions in the front-rear direction and the left-right direction are irrelevant. The number of wheels 2 driven by the motor 4 is also irrelevant, and may be all or at least one of the multiple wheels provided to the vehicle 1.

The motor 4 has a function of driving the wheel 2 under the control of the control system 20. The motor 4 may be a motor-generator having both a function as a motor and a function as a generator. The type and the number of motors 4 controlled by the control system 20 are irrelevant. On the power transmission path from the motor 4 to the wheel 2, the motor 4 and the wheel 2 may be directly connected to each other, or some component (e.g., reduction mechanism or differential mechanism) may be interposed between the motor 4 and the wheel 2.

The motor 4 is electrically connected to a battery 10 via an inverter 6. The inverter 6 is a converter (DC-AC inverter) that mutually converts the electric power (DC power) of a DC circuit on the side of the battery 10 and the electronic power (AC power) of an AC circuit on the side of the motor 4. The same number of the inverters 6 as that of the motors 4 are provided. The battery 10 is exemplified by a lithium-ion secondary battery or a nickel-hydrogen secondary battery, and is a secondary battery capable of supplying a high-voltage DC current of several hundred bolt. While the motor 4 is power running, the DC power of the battery 10 is converted to AC power by the inverter 6 and the converted AC power is then supplied to the motor 4. While the motor 4 is generating electric power (regeneration), the electric power generated the motor 4 by using inertial rotation of the wheel 2 is converted to DC power by the inverter 6 and the battery 10 is charged with the DC power.

The vehicle 1 is equipped with the superordinate ECU 21 and the MCU 22 (Motor Control Unit) serving as Electronic Control Units (ECUs) related to the control of the motor 4. The electronic control units 21 and 22 each include a processor (Central Processing Unit), a memory (main memory), a storage device (storage), and an interface device, for example, which do not appear in the drawings. These elements are communicably connected to each other via an internal bus. The contents of the control to be executed by the electronic control units 21 and 22 are recorded and stored as firmware and/or an application program in the memory, and when the program is executed, the content of the program is expanded in a memory space and executed by the processor.

The superordinate ECU 21 is an electronic control device that collectively controls all the electronic devices mounted on the vehicle 1, and is exemplified by an EV-ECU (Electric Vehicle-ECU), an HEV-ECU (Hybrid Electric Vehicle-ECU), and a PHEV-ECU (Plug-in Hybrid Electric Vehicle-ECU). A sensor for obtaining operation data for the vehicle 1 and the battery 10 are connected to an input side of the superordinate ECU 21. The superordinate ECU 21 is communicably connected to the MCU 22 via, for example, a CAN (Controller Area Network).

In the example shown in FIG. 1, as sensors for acquiring the operation data for the vehicle 1, an accelerator position sensor 31, a brake sensor 32, and a steering sensor 33 are connected to the superordinate ECU 21. The accelerator position sensor 31 is a sensor that detects the amount (accelerator position) of depressing of an accelerator pedal and its depression velocity. The brake sensor 32 is a sensor that detects the amount (brake pedal stroke) of depressing of a brake pedal and its depression velocity. The steering sensor 33 is a sensor that detects a steering angle of the wheel 2 (actual steering angle or steering angle of a steering wheel).

To the superordinate ECU 21, a resolver 34 and a wheel speed sensor 36 may be connected. The resolver 34 is a sensor that detects a rotational speed (angular speed ω_{M}) of the motor 4. The resolver 34 outputs data of a rotational angle of the motor 4 in the form of a two-phase AC voltage. The rotational speed of the motor 4 is grasped from the chronological change of the AC voltage. The wheel speed sensor 36 is a sensor that detects a rotational speed (angular speed ω_{W}) of the wheel 2. The resolver 34 may be replaced by another sensor (e.g., hall sensor or encoder) different in internal structure and operation principle.

The MCU 22 is an electronic control device that controls the operating state of the motor 4 by controlling the inverter 6. The MCU 22 is communicatively connected to the superordinate ECU 21 as described above, and a sensor for obtaining data (hereinafter referred to as "element data") of elements on the power transmission path from the motor 4 to the wheel 2 is connected to the input side of the MCU 22. In the example shown in FIG. 1, as sensors for obtaining the element data, the resolver 34 and the wheel speed sensor 36 are connected to the MCU 22. The motor 4 is connected to the output side of the MCU 22.

Here, the elements on the power transmission path from the motor 4 to the wheel 2 means elements (mechanical elements and mechanisms) constituting the power transmission path from the motor 4 to the wheel 2. The above elements include at least the motor 4 and the wheel 2, and may include a reduction mechanism or a differential mechanism interposed between the motor 4 and the wheel 2. The element data means data related to these elements. The element data may include, for example, data (torque, output, horsepower, electric power, rotational speed, angular velocity, angular acceleration) on driving force of each of the motor 4 and the wheel 2, inertia of each of the motor 4 and the wheel 2, data (presence or absence of a slip, actual slip ratio, difference between an actual wheel speed and a target wheel speed) on slippage of the wheel 2. The element data is not limited to a value (information) that changes with time, and may include a fixed value. For example, the element data may include specification data (performance and dimension of each of the motor 4 and the wheel 2, reduction ratio of the reduction mechanism, torque-difference amplification ratio (deceleration rate, differential deceleration ratio) of the differential mechanism) of each element.

### 1-2. Overview of Control

As described above, the control system 20 includes the superordinate ECU 21 and the MCU 22, and controls the motor 4. Specifically, the superordinate ECU 21 calculates a demand torque required for the motor 4 on the basis of the operation data. Then, the MCU 22 calculates an instruction torque to control the motor 4 by incorporating the element data into the demand torque calculated in the superordinate ECU 21, and controls the motor 4 to output the calculated instruction torque.

The demand torque here may include not only a positive demand torque (demand driving torque) required for the motor 4 during power running but also a negative demand torque (demand regenerative torque) required for the motor 4 during power generation (during regeneration). Similarly, the instruction torque here may include not only a positive instruction torque (instruction driving torque) required for the motor 4 during power running but also a negative instruction torque (instruction regenerative torque) required for the motor 4 during power generation (during regeneration).

Meanwhile, the motor 4 operates using the electric power of the battery 10 during power running, but the battery 10 functions also as a power source of an on-board electronic device except for the motor 4 as well as the power source of the motor 4. The output of the battery 10 is set in such a range that the battery 10 can be normally used (hereinafter referred to as a "tolerance output range"), and when an output that deviates from the tolerance output range (exceeds this range or falls below this range) is required for the battery 10, a malfunction such as a temperature rise or heat generation may occur.

The upper limit value and the lower limit value of the tolerance output range of the battery 10 are not fixed values but each vary according to the state of the battery 10 (e.g., battery temperature or SOC (State Of Charge, charging rate)). For example, the upper limit value of the tolerance output range of the battery 10 when the SOC of the battery 10 is relatively low (when SOC is close to 0) is set smaller than that when the SOC of the battery 10 is relatively high (when it is close to a fully-charged state). The lower limit value of the tolerance output range of the battery 10 when the SOC of the battery 10 is relatively high is set smaller than that when the SOC of the battery 10 is relatively low. When the battery temperature is high, the upper limit value and the lower limit value are set so that the tolerance output range is narrower than that in a normal state.

The output required for the battery 10 varies according to the torque of the motor 4 (the torque actually output from the motor 4). During power running, when the positive torque of the motor 4 is higher, the output required for the battery 10 (output to be extracted from the battery 10) becomes lager. During regeneration, when the negative torque of the motor 4 is smaller (the absolute value of the torque is larger), the output required for the battery 10 (the electric power supplied to the battery 10) becomes larger.

Here, if the torque of the motor 4 is calculated in a single electronic control device, the torque of the motor 4 only needs to be simply set so as not to exceed the tolerance output range in the electronic control device, so that the above-described malfunction is less likely to occur. In contrast, if the demand torque and the instruction torque of the motor 4 are calculated by the superordinate ECU 21 and the MCU 22, respectively, as in the control system 20, the above-described malfunction may occur.

To inhibit such a malfunction of the battery 10, the control system 20 executes battery protection control that restricts the demand torque calculated by the superordinate ECU 21 within a range of the torque of the motor 4 set on the basis of the state of the battery 10. As described above, since the superordinate ECU 21 executes the battery protection control after calculating the demand torque, the subsequent MCU 22 calculates the instruction torque of the motor 4 based on the demand torque calculated (within the set range) by incorporating the state of the battery 10. Therefore, the above-described malfunction is suppressed, and the battery 10 is protected.

In the control system 20, the MCU 22 calculates the instruction torque by incorporating the element data into the demand torque, also sets the range of the torque of the motor 4 based on the state of the battery 10, and performs the battery protection control that restricts the torque of the motor 4 within the set range. Therefore, both protection of the battery 10 and the appropriate control of the motor 4 can be achieved, and by performing the battery protection control again after calculating the instruction torque in the MCU 22, the instruction torque transmitted to the motor 4 can be prevented from deviating from the set range. Therefore, the battery 10 is protected.

### 1-3. Configuration of Control

In order to achieve the above-described calculation and control, the superordinate ECU 21 is provided with a first arithmetic unit 24 and a first restricting unit 25, and the MCU 22 is provided with a second arithmetic unit 27, a second restricting unit 28, and a controlling unit 29. These elements are shown by classifying the functions of the superordinate ECU 21 and the MCU 22 for convenience. These elements may be described as independent programs for implementing the functions of the respective elements. Alternatively, these elements may be described as a combined program in which multiple elements are combined.

The first arithmetic unit 24 calculates, as a first demand torque T_{D1}, the demand torque required for the motor 4 on the basis of the operation data. For example, an accelerator position, a brake pedal stroke, a steering angle, and the like detected by the sensors 31 to 33 are transmitted as the operation data to the first arithmetic unit 24. The method for calculating the first demand torque T_{D1} is not particularly limited, and any known method for calculating can be applied. The first arithmetic unit 24 may calculate the first demand torque T_{D1} based on vehicle speed information in addition to the operation data. The first demand torque T_{D1} calculated by the first arithmetic unit 24 is transmitted to the first restricting unit 25.

The first restricting unit 25 performs the above-described battery protection control. As the battery protection control, the first restricting unit 25 sets a first range R1 of the first demand torque T_{D1} based on the state of the battery 10, and outputs a second demand torque T_{D2} obtained by restricting the first demand torque T_{D1} within the first range R1.

The first range R1 is the range that is set for the output of the motor 4 such that the total vehicle output does not exceed the tolerance output range of the battery 10, and the total vehicle output corresponds to the output expected to be required for the battery 10 from the entire vehicle 1 at that time point. The first range R1 may be set as each of positive and negative values or may be set as a range from positive to negative. For example, in the former case, if the first demand torque T_{D1} is a positive value (driving torque), the first range R1 is set to a range of zero or more and an upper limit value Ru1 or less (where the upper limit value Ru1 is larger than zero). In contrast, if the first demand torque T_{D1} is a negative value (regenerative torque), the first range R1 is set to a range of zero or less and a lower limit value RI1 or more (where the lower limit value RI1 is less than zero). If the motor 4 is one that does not have a function as a generator, the negative value of the first demand torque T_{D1} (regenerative torque) does not have to be considered.

For example, the first restricting unit 25 may calculate the total vehicle output at that time point using the obtained operation data. If only the motor 4 is considered as a device that exchanges electric power with the battery 10, the first restricting unit 25 calculates, for example, the total vehicle output by multiplying the demand torque T_{D1} by the rotational speed of the motor 4. The rotational speed of the motor 4 may be calculated from the value detected by the resolver 34, or may be calculated by converting the value detected by the wheel speed sensor 36 into a motor angular speed.

Then, the first restricting unit 25 obtains state data i_{BAT} of the battery 10 from the battery 10 or a BMU (Battery Management Unit; not shown) that manages the battery 10. The state data i_{BAT} may include, for example, temperature data, voltage data, electric current data, SOC data of the battery 10. The first restricting unit 25 calculates the tolerance output range of the battery 10 from the obtained state data i_{BAT}, and sets the first range R1 such that the total vehicle output does not deviate from the tolerance output range.

For example, if it is determined, from the calculated total vehicle output, that the vehicle 1 as a whole is scheduled to extract electric power from the battery 10 (total vehicle output is a positive value), the first restricting unit 25 calculates the upper limit value Ru1 of the first demand torque T_{D1} that causes the total vehicle output not to exceed the upper limit value of the tolerance output range and sets the first range R1 to a range of zero or more and the upper limit value Ru1 or less. Further, if it is determined, from the calculated total vehicle output, that the vehicle 1 as a whole is scheduled to supply electric power to the battery 10 (total vehicle output is a negative value), the first restricting unit 25 calculates the lower limit value RI1 of the first demand torque T_{D1} that causes the total vehicle output not to be lower than the lower limit value of the tolerance output range and sets the first range R1 to a range of zero or less and the lower limit value RI1 or more.

If the value of the first demand torque T_{D1} exceeds the upper limit value Ru1 of the first range R1 (if the first demand torque T_{D1} deviates from the first range R1), the first restricting unit 25 replaces the first demand torque T_{D1} with the upper limit value Ru1 and outputs the replaced torque as the second demand torque T_{D2}. Furthermore, if the value of the first demand torque T_{D1} is lower than the lower limit value RI1 of the first range R1 (if the first demand torque T_{D1} deviates from the first range R1), the first restricting unit 25 replaces the first demand torque T_{D1} with the lower limit value RI1 and outputs the replaced torque as the second demand torque T_{D2}. This means that, in this case, the first demand torque T_{D1} is limited by the upper limit value Ru1 or the lower limit value RI1 of the first range R1, and the upper limit value Ru1 or the lower limit value RI1 of the first range R1 is output as the second demand torque T_{D2}.

On the other hand, if the first demand torque T_{D1} does not deviate from the first range R1 (if the first demand torque T_{D1} is within the first range R1), the first restricting unit 25 outputs, as the second demand torque T_{D2}, the unmodified first demand torque T_{D1}. This means that, in the present embodiment, the value output from the first restricting unit 25 is regarded as the second demand torque T_{D2} regardless of whether or not the first demand torque T_{D1} is replaced with the upper limit value Ru1 or the lower limit value RI1 of the first range R1. The second demand torque T_{D2} output from the first restricting unit 25 is transmitted to the MCU 22.

The second arithmetic unit 27 calculates the instruction torque of the motor 4 as a first instruction torque T_{I1} by incorporating the element data into the second demand torque T_{D2} transmitted from the first restricting unit 25. In other words, the second arithmetic unit 27 does not use the unmodified second demand torque T_{D2} transmitted from the first restricting unit 25 as an instruction torque that is to be instructed to the motor 4, but does calculate the first instruction torque T_{I1} by incorporating the element data. The first instruction torque T_{I1} calculated by the second arithmetic unit 27 is transmitted to the second restricting unit 28.

As the above, the calculation of the first demand torque T_{D1} based on the operation data and the calculation of the first instruction torque T_{I1} incorporating the element data are performed by the different electronic control units 21 and 22, so that the operation loads of the respective electronic control units 21 and 22 can be reduced. If the calculation cycle (e.g., 1 ms) of the MCU 22 is shorter than that (e.g., 10 ms) of the superordinate ECU 21, the calculation of the first instruction torque T_{I1} incorporating the operation data in the MCU 22 makes it possible to take advantage of the high responsiveness of the motor 4 in controlling the vehicle 1.

It is sufficient that the control (arithmetic process, hereinafter referred to as "torque control") performed by the second arithmetic unit 27 calculates the first instruction torque T_{I1} at least by incorporating the element data into the second demand torque T_{D2}, and any known torque control can be applied. The torque control may include, for example, vibration suppressing control, traction control, and slip control. The vibration suppressing control is control that suppresses vibration of the vehicle 1 and vibration of the elements on the power transmission path from the motor 4 to the wheel 2. The traction control is control that reduces the driving torque (positive torque) output from the motor 4 when a slip of the wheel 2 is detected. The slip control is control that stabilizes the posture of the vehicle 1 by optimizing the slip amount of the wheel 2. In addition, if the motor 4 drives the left and right wheels 2, the torque control may further include, for example, yaw control that stabilizes the posture of the vehicle 1 by actively adjusting the share ratio of the driving forces of the left and right wheels 2, and control that achieves an ideal left and right wheel difference.

The second restricting unit 28 implements the above-described battery protection control in the MCU 22. As the battery protection control, the second restricting unit 28 sets a second range R2 of the first instruction torque T_{I1} on the basis of a state of the battery 10, and outputs a second instruction torque T_{I2} obtained by restricting the first instruction torque T_{I1} within the second range R2.

The second range R2 is a range that is set for the output of the motor 4 such that the total vehicle output at that time point (when the first instruction torque T_{I1} is calculated by the MCU 22) does not exceed the tolerance output range of the battery 10. Like the first range R1, the second range R2 may be set as each of positive and negative values or may be set as a range from positive to negative. For example, in the former case, if the first instruction torque T_{I1} is a positive value, the second range R2 is set to a range of zero or more and an upper limit value Ru2 or less (where the upper limit value Ru2 is larger than zero). In contrast, if the first instruction torque T_{I1} is a negative value, the second range R2 is set to a range of zero or less and a lower limit value RI2 or more (where the lower limit value RI2 is less than zero). If the motor 4 is one that does not have a function as a generator, the negative value of the first instruction torque T_{I1} does not have to be considered.

The second restricting unit 28 may calculate the total vehicle output at that time point using, for example, the first instruction torque T_{I1} and a value detected by the resolver 34 and/or a value detected by the wheel speed sensor 36. If another device in addition to the motor 4 is also considered as a device that exchanges electric power with the battery 10, the second restricting unit 28 may obtain data related to the other device from the superordinate ECU 21 and use the data to calculate the total vehicle output.

Then, the second restricting unit 28 calculates the tolerance output range of the battery 10 from the state data i_{BAT} obtained via the superordinate ECU 21, and sets the second range R2 such that the total vehicle output does not deviate from the tolerance output range. For example, if it is determined, from the total vehicle output calculated at that time point, that the vehicle 1 as a whole is scheduled to extract electric power from the battery 10, the second restricting unit 28 calculates the upper limit value Ru2 of the first instruction torque T_{I1} that causes the total vehicle output not to exceed the upper limit value of the tolerance output range and sets the second range R2 to a range of zero or more and the upper limit value Ru2 or less. Further, if it is determined that the vehicle 1 as a whole is scheduled to supply electric power to the battery 10, the second restricting unit 28 calculates the lower limit value RI2 of the first instruction torque T_{I1} that causes the total vehicle output not to be lower than the lower limit value of the tolerance output range and sets the second range R2 to a range of zero or less and the lower limit value RI2 or more. The second restricting unit 28 may obtain the state data i_{BAT} directly from the battery 10 or the BMU without using the superordinate ECU 21.

If the value of the first instruction torque T_{I1} exceeds the upper limit value Ru2 of the second range R2 (if the first instruction torque T_{I1} deviates from the second range R2), the second restricting unit 28 replaces the first instruction torque T_{I1} with the upper limit value Ru2 and outputs the replaced torque as the second instruction torque T_{I2}. If the value of the first instruction torque T_{I1} is lower than the lower limit value RI2 of the second range R2 (if the first instruction torque T_{I1} deviates from the second range R2, which means less than the lower limit value RI2), the second restricting unit 28 replaces the first instruction torque T_{I1} with the lower limit value RI2 and outputs the replaced torque as the second instruction torque T_{I2}. This means that, in this case, the first instruction torque T_{I1} is limited by the upper limit value Ru2 or the lower limit value RI2 of the second range R2, and the upper limit value Ru1 or the lower limit value RI2 of the second range R2 is output as the second instruction torque T_{I2}.

On the other hand, if the first instruction torque T_{I1} does not deviate from the second range R2 (if the first instruction torque T_{I1} is within the second range R2), the second restricting unit 28 outputs the unmodified first instruction torque T_{I1} as the second instruction torque T_{I2}. This means that, like the first restricting unit 25, in the present embodiment, the value output from the second restricting unit 28 is regarded as the second instruction torque T_{I2} regardless of whether or not the first instruction torque T_{I1} is replaced with the upper limit value Ru2 or the lower limit value RI2 of the second range R2. The second instruction torque T_{I2} output from the second restricting unit 28 is transmitted to the controlling unit 29.

The controlling unit 29 controls the motor 4 such that the motor 4 outputs the second instruction torque T_{I2} transmitted from the second restricting unit 28. The controlling unit 29 controls the motor 4 by driving the inverter 6 so as to obtain the received second instruction torque T_{I2}.

### 1-4. Actions and Effects

FIG. 2 is a block diagram showing a specific example of a control logic (vehicle control method according to the embodiment) executed by the control system 20 when the vehicle 1 as a whole extracts electric power from the battery 10 and the motor 4 is power running (that is, when the torque of the motor 4 is positive). In FIG. 2, Steps A1 and A2 are performed by the superordinate ECU 21, and Steps B1-B3 are performed by the MCU 22. Step A1 corresponds to a step of calculating the first demand torque T_{D1} (processing step of the first arithmetic unit 24), and Step A2 corresponds to a step of calculating the second demand torque T_{D2} (processing step of the first restricting unit 25).

Step B1 corresponds to a step of calculating the first instruction torque T_{I1} (processing step of the second arithmetic unit 27), and Step B2 corresponds to a step of calculating the second instruction torque T_{I2} (processing step of the second restricting unit 28). Step B3 corresponds to a step of controlling the motor 4 (processing step of the controller 29). In FIG. 2, Steps A1, A2, B1, and B2 show respective graphs plotting an example of the torque value calculated in respective corresponding Steps A1, A2, B1, and B2. The vertical axis of each graph represents the value of calculated torque, and the horizontal axis represents, for example, time.

As illustrated in FIG. 2, in Step A1, a demand torque required for the motor 4 is calculated as the first demand torque T_{D1}. In the following Step A2, as the battery protection control, the first demand torque T_{D1} is restricted within the first range R1 set based on the state of the battery 10, and the restricted value is output as the second demand torque T_{D2}. More specifically, in Step A2, on the basis of the state data i_{BAT} and the total vehicle output, the first range R1 (hatched arrow in the graph of Step A2) is set, the first demand torque T_{D1} (two-dot chain line in the graph) is restricted to a value within the first range R1 (i.e., a value equal to or less than the upper limit value Ru1 of the first range R1) and the restricted value is output as the second demand torque T_{D2} (solid line in the graph).

In Step B1, as the torque control, the instruction torque to be instructed to the motor 4, which is obtained by incorporating the element data into the second demand torque T_{D2} (the two-dot chain line in the graph of Step B1) is calculated as the first instruction torque T_{I1} (the solid line of the graph). In the subsequent Step B2, as the battery protection control, the first instruction torque T_{I1} is restricted within the second range R2 set based on the state of the battery 10, and the restricted value is calculated as the second instruction torque T_{I2}. More specifically, in Step B2, on the basis of the state data i_{BAT} and the total vehicle output, the second range R2 (hatched arrow in the graph of Step B2) is set, the first instruction torque T_{I1} (two-dot chain line in the graph) is restricted to a value within the second range R2 (i.e., a value equal to or less than the upper limit value Ru2 of the second range R2) and the restricted value is output as the second instruction torque T_{I2} (solid line in the graph). Then, in Step B3, the motor 4 is controlled so as to output the second instruction torque T_{I2}.

As shown in the graph of Step A2, at the time point when the first demand torque T_{D1} exceeds the upper limit Ru1 of the first range R1, the first restricting unit 25 in the superordinate ECU 21 replaces the first demand torque T_{D1} (two-dot chain line in the graph of Step A2) with the upper limit Ru1 and outputs the replaced value as the second demand torque T_{D2} (the solid line in the graph). As a result, in the ensuing processing step (Step B1) of the second arithmetic unit 27 of the MCU 22, the torque control incorporating the element data into the restricted second demand torque T_{D2} is executed. This enables appropriate control (e.g., intended vibration suppression, optimization of a slip amount of the wheel 2, and achieving ideal difference between the left and right wheels) of the motor 4, suppressing the occurrence of the above-described malfunction.

In addition, as shown in the graph of Step B1, in the second arithmetic unit 27, the first instruction torque T_{I1} (the solid line in the graph of Step B1) may be larger than the second demand torque T_{D2} (the two-dot chain line in the graph) as a result of execution of the torque control. However, in the MCU 22, the battery protection control is executed again in the second restricting unit 28. Accordingly, as shown in the graph of Step B2, at the time point when the first instruction torque T_{I1} exceeds the upper limit Ru2 of the second range R2, the first instruction torque T_{I1} (two-dot chain line in the graph of Step B2) is replaced with the upper limit Ru2 and the replaced value is output as the second instruction torque T_{I2} (the solid line in the graph).

Therefore, in the subsequent Step B3, the motor 4 is controlled so as to output the restricted second instruction torque T_{I2}, so that the output torque of the motor 4 is suppressed from exceeding the upper limit Ru2. For the above, the battery 10 can be protected because a demand on the battery 10 for the output deviating from the tolerance output range (here, output exceeding the upper limit of the tolerance output range), i.e., overdischarging of the battery 10, can be suppressed. As described above, according to the control system 20, since the battery protection control is performed by both the superordinate ECU 21 and the MCU 22, it is possible to appropriately control the motor 4 while protecting the battery 10.

The control logic shown in FIG. 2 is also applied to a case where the vehicle 1 as a whole supplies electric power to the battery 10 and when the motor 4 is regenerating (i.e., a case where the torque of the motor 4 is a negative value). In other words, although the graphs in Steps A1, A2, B1, and B2 in FIG. 2 assume that the torque of the motor 4 is a positive value, the same Steps A1, A2, and B1-B3 can be applied even if the torque is a negative value.

In the step corresponding to Step A1 of FIG. 2, the first demand torque T_{D1} in a negative value is calculated based on the operation data, but illustrating of the graph is omitted here. In the step corresponding to the subsequent Step A2, as the battery protection control, the first range R1 is set based on the state data i_{BAT} and the total vehicle output, and the first demand torque T_{D1} is restricted to a value (a value equal to or more than the lower limit value RI1 of the first range R1) within the first range R1 and the restricted value is output as the second demand torque T_{D2}.

In the step corresponding to Step B1, as the torque control, the first instruction torque T_{I1} is calculated by incorporating the element data into the second demand torque T_{D2}. In the step corresponding to the subsequent Step B2, as the battery protection control, the second range R2 is set based on the state data i_{BAT} and the total vehicle output, and the first instruction torque T_{I1} is restricted to a value (a value equal to or more than the lower limit value RI2 of the second range R2) within the second range R2 and the restricted value is output as the second instruction torque T_{I2}. Then, in the step corresponding to Step B3, the motor 4 is controlled so as to output the second instruction torque T_{I2}.

Thereby, the motor 4 is controlled so as to output the restricted second instruction torque T_{I2} (regenerative torque), so that overcharging of the battery 10 is suppressed. This can protect the battery 10. In addition, in the step corresponding to Step B1, the torque control incorporating the element data into the second demand torque T_{D2} is executed. This enables appropriate control (e.g., intended vibration suppression, optimization of a slip amount of the wheel 2, and achieving ideal difference between the left and right wheels) of the motor 4, suppressing the occurrence of the above-described malfunction of the battery 10. Accordingly, it is possible to appropriately control the motor 4 while protecting the battery 10.

### 2. Second Embodiment

### 2-1. Configuration of Vehicle

FIG. 3 is a block diagram illustrating a configuration of the control system 20A of the second embodiment in conjunction with a control logic implemented in the control system 20A. The control system 20A is applied to a vehicle 1A provided with a power distribution mechanism 11 (differential mechanism) that applies a torque difference to the left and right wheels 2, and a left motor 4L (left motor) and a right motor 4R (right motor) each serving as the motor 4. The control system 20A has a function of controlling both the left motor 4L and the right motor 4R, and includes a superordinate ECU 21A and an MCU 22A.

In FIG. 3, alphabetical letters R and L which are attached to the numerical signs represent the arrangement positions of the elements related to the signs (i.e., whether the elements are positioned on the right side or the left side of the vehicle 1A). For example, the reference sign 2L represents one (left wheel) of the left and right wheels 2 located on the left side of the vehicle 1A, and the reference sign 2R represents the other (right wheel) located on the right side. The left and right layouts in the vehicle 1A may optionally correspond to the left and right directions determined based on the traveling direction of that vehicle.

In addition, in the present embodiment, the motors 4 are motors (first motors) that each drive a rear wheel (first one of a front wheel and a rear wheel) of the vehicle 1A serving as one of the left and right wheels. The vehicle 1A is further provided with a motor 5 (second motor) that drives front wheels 3 (the second one of a front wheel or a rear wheel). The motor 5 is different from the motors 4 controlled by the MCU 22A and uses the electric power of the battery 10 to drive the front wheels 3. The control system 20A further includes an MCU 23 (different subordinate control device) that controls the motor 5.

Hereinafter, the left and right wheels 2 are referred to as the "rear wheels 2 (rear left wheel 2L, rear right wheel 2R)". The motors 4 are also referred to as the "rear motors 4 (rear left motor 4L, rear right motor 4R)", and the motor 5 is referred to as the "front motor 5". The MCU 22A is referred to as an "RrMCU 22A", and the MCU 23 is referred to as an "FrMCU 23".

The rear motors 4 have a function of driving the corresponding rear wheels 2. The rear left motor 4L (RL motor) and the rear right motor 4R (RR motor) operate independently of each other, and may individually output driving forces having different magnitudes from each other. The rear left motor 4L is electrically connected to the battery 10 via a rear left inverter 6L serving as the inverter 6 (hereinafter, referred to as "rear inverter 6"). The rear right motor 4R is electrically connected to the battery 10 via a rear right inverter 6R serving as another rear inverter 6. Further, the rear left motor 4L and the rear right motor 4R are each connected to the power distribution mechanism 11 via each of a pair of reduction mechanism provided separately from each other. The reduction mechanism is a mechanism that increases the torque (driving force) by reducing the torque output from the rear motors 4. If the torque performances of the rear motors 4 are sufficiently high, the reduction mechanism may be omitted.

The power distribution mechanism 11 amplifies the torque difference between the pair of rear motors 4 and distributes the torque difference to the respective rear wheels 2. The power distribution mechanism 11 of the present embodiment is a differential mechanism having a yaw control function (Active Yaw Control (AYC) function), and is interposed between an axle connected to the rear left wheel 2L and an axle connected to the rear right wheel 2R. The yaw control function adjusts the yaw moment by actively controlling the sharing ratio of the driving forces (driving torques) of the rear left wheel 2L and the rear right wheel 2R, and stabilizes the posture of the vehicle 1A. In the power distribution mechanism 11, a planetary gear mechanism, a differential gear mechanism, and the like are incorporated. The vehicle driving apparatus including the pair of rear motors 4 and the power distribution mechanism 11 is also referred to as a Dual Motor AYC (DM-AYC) device. The structure of the power distribution mechanism 11 can adopt any known structure that achieves the yaw control function.

The front motor 5 (F motor) has a function of driving the front wheel 3. Like the rear motors 4, the front motor 5 may be a motor-generator having both the function as a motor and the function as a generator. The front motor 5 is electrically connected to the battery 10 via a front inverter 7. The front inverter 7 is a converter (DC-AC inverter) that mutually converts the electric power (DC power) of a DC circuit on the side of the battery 10 and the electric power (AC power) of an AC circuit on the side of the front motor 5. The front motor 5 is connected to the left and right front wheels 3 (front left wheel 3L, front right wheel 3R) via a differential 12, for example.

The FrMCU 23 is an electronic control unit that controls the operating state of the front motor 5 by controlling the front inverter 7. Like the superordinate ECU 21A and the RrMCU 22A, the FrMCU 23 includes a processor (Central Processing Unit), a memory (main memory), a storage device (storage), and an interface device, for example, which do not appear in the drawings. These elements are communicably connected to each other via an internal bus. For example, the FrMCU 23 is communicably connected to the superordinate ECU 21A via, for example, a CAN (Controller Area Network).

The vehicle 1A is provided with the accelerator position sensor 31, the brake sensor 32, the steering sensor 33, a rear left resolver 34L and a rear right resolver 34R each of which serves as the resolver 34, a front resolver 35, a rear left wheel speed sensor 36L and the rear right wheel speed sensor 36R each of which serves as the wheel speed sensor 36, a front left wheel speed sensor 37L, and the front right wheel speed sensor 37R. The rear left resolver 34L detects a rotational speed (angular velocity ω_{RLM}) of the rear left motor 4L, and the rear right resolver 34R detects a rotational speed (angular velocity ω_{RRM}) of the rear right motor 4R. The rear left wheel speed sensor 36L detects a rotational speed (angular speed ω_{RLW}) of the rear left wheel 2L, and the rear right wheel speed sensor 36R detects a rotational speed (angular speed ω_{RRW}) of the rear right wheel 2R.

The front resolver 35 is a sensor that detects the rotational speed (angular speed ω_{FM}) of the front motor 5, and the front wheel speed sensors 37 (37L, 37R) are sensors that detect the speed of the front wheels 3. The front left wheel speed sensor 37L detects a rotational speed (angular speed ω_{FLW}) of the front left wheel 3L, and the front right wheel speed sensor 37R detects a rotational speed (angular speed ω_{FRW}) of the front right wheel 3R.

To the input side of the superordinate ECU 21A, the battery 10 and the sensors 31 to 37 are connected. Further, to the input side of the RrMCU 22A, the rear resolvers 34 (34L, 34R) and the rear wheel speed sensors 36 (36L, 36R) serving as sensors to obtain the element data are connected.

### 2-2. Overview of Control

The control system 20A includes the superordinate ECU 21A, the RrMCU 22A, and the FrMCU 23, and controls the rear left motor 4L and the rear right motor 4R serving as the rear motors 4 and the front motor 5.

Specifically, the superordinate ECU 21A calculates, based on the operation data, a torque required for the rear motors 4 as the first demand torque T_{D1} and calculates a torque required for the front motor 5 as a third demand torque T_{D3}. Then, as the battery protection control, the superordinate ECU 21A outputs the second demand torque T_{D2} obtained by restricting the first demand torque T_{D1} within the first range R1 set based on the state of the battery 10, and also outputs a fourth demand torque T_{D4} obtained by restricting the third demand torque T_{D3} within the third range R3 set based on the state of the battery 10.

The RrMCU 22A performs torque control in which an instruction torque of the rear motor 4 is calculated as the first instruction torque T_{I1} by incorporating the element data into the second demand torque T_{D2}. The RrMCU 22A calculates, as the first instruction torque T_{I1}, a first left instruction torque T_{I1L} (left instruction torque) of the rear left motor 4L and a first right instruction torque T_{I1R} (right instruction torque) of the rear right motor 4R. Then, the RrMCU 22A calculates a second left instruction torque T_{I2L} and a second right instruction torque T_{I2R} obtained by respectively restricting the first left instruction torque T_{I1L} and the first right instruction torque T_{I1R} within the second range R2 set based on the state of the battery 10. The RrMCU 22A controls the rear left motor 4L to output the second left instruction torque T_{I2L} and controls the rear right motor 4R to output the second right instruction torque T_{I2R}.

The FrMCU 23 controls the front motor 5 to output the fourth demand torque T_{D4}. This means that the FrMCU 23 of the present embodiment does not execute the torque control as executed by the RrMCU 22A, but does control the front motor 5 to output, as an instruction torque to be instructed to the front motor 5, the unmodified fourth demand torque T_{D4} transmitted from the superordinate ECU 21A.

### 2-3. Configuration of Control

In order to achieve the above-described calculation and control, the superordinate ECU 21A is provided with a first arithmetic unit 24A and a first restricting unit 25A, and the RrMCU 22A is provided with a second arithmetic unit 27A, a second restricting unit 28A, and a controlling unit 29A.

The first arithmetic unit 24A calculates the first demand torque T_{D1} and the third demand torque T_{D3} based on the operation data. The first arithmetic unit 24A may calculate, as the first demand torque T_{D1}, the first left demand torque T_{D1L} required for the rear left motor 4L and the first right demand torque T_{D1R} required for the rear right motor 4R independently of each other. The first left demand torque T_{D1L}, the first right demand torque T_{D1R}, and the third demand torque T_{D3} calculated by the first arithmetic unit 24A are transmitted to the first restricting unit 25A. If the front motor 5 is a motor-generator having both a function as a motor and a function as a generator, the third demand torque T_{D3} may include a negative demand torque (demand regenerative torque) required for the front motor 5 during regeneration in addition to a positive demand torque (demand driving torque) required for the front motor 5 during power running.

The first restricting unit 25A performs the battery protection control like the first restricting unit 25 of the first embodiment. The first restricting unit 25A sets, based on the state of the battery 10, the first range R1 of the first demand torque T_{D1} and the third range R3 of the third demand torque T_{D3} which ranges do not deviate from the tolerance output range. The first restricting unit 25A may set, as the first range R1, a left first range R1L of the first left demand torque T_{D1L} and a right first range R1R of the first right demand torque T_{D1R} independently of each other.

Like the first embodiment, the first range R1 (R1L, R1R) may be set to a range of zero or more and an upper limit value or less (where the upper limit value is larger than zero) when the first demand torque T_{D1} (T_{D1L}, T_{D1R}) is a positive value, and may be set to a range of zero or less and a lower limit value or more (where the lower limit value is less than zero) when the first demand torque T_{D1} (T_{D1L}, T_{D1R}) is a negative value. The third range R3 is a range set for the output of the front motor 5 in order to prevent the total vehicle output from exceeding the tolerance output range of the battery 10, and like the first range R1, may be set as each of positive and negative values or may be set as a range from positive to negative. The third range R3 is set to a range of zero or more and an upper limit value or less (where the upper limit value is larger than zero) when the third demand torque T_{D3} is a positive value, and is set to a range of zero or less and a lower limit value or more (where the lower limit value is less than zero) when the third demand torque T_{D3} is a negative value.

Then, the first restricting unit 25A outputs the second demand torque T_{D2} obtained by restricting the first demand torque T_{D1} within the first range R1, and outputs the fourth demand torque T_{D4} obtained by restricting the third demand torque T_{D3} within the third range R3. If the left first range R1L and the right first range R1R are set independently of each other as the first range R1, the first restricting unit 25A may output, as the second demand torque T_{D2}, a second left demand torque T_{D2L} and a second right demand torque T_{D2R}. That is, the first restricting unit 25A may output the second left demand torque T_{D2L} obtained by restricting the first left demand torque T_{D1L} within the left first range R1L and may output the second right demand torque T_{D2R} obtained by restricting the first right demand torque T_{D1R} within the right first range R1R.

In setting the respective ranges R1 (R1L, R1R) and R3, the first restricting unit 25A of the present embodiment calculates the total vehicle output using the sum of the product of the first left demand torque T_{D1L} and the rotational speed of the rear left motor 4L and the product of the first right demand torque T_{D1R} and the rotational speed of the rear right motor 4R. Specifically, the first restricting unit 25A calculates the total vehicle output based on the calculation logic illustrated in FIG. 4.

For example, the first restricting unit 25A substitutes the first left demand torque T_{D1L} and the first right demand torque T_{D1R} for the "Torque of RL Motor 4L" and the "Torque of RR Motor 4R" in FIG. 4, respectively. Further, the first restricting unit 25A substitutes the rotational speed of the rear left motor 4L and the rotational speed of the rear right motor 4R at that time point for the "Rotational Speed of RL Motor 4L" and the "Rotational Speed of RR Motor 4R" in FIG. 4, respectively. In addition, the first restricting unit 25A substitutes the third demand torque T_{D3} for the "Torque of F Motor 5" in FIG. 4, and also substitutes the rotational speed of the front motor 5 at that time point for the "Rotational Speed of F Motor 5" in FIG. 4.

The rotational speed of each rear motor 4 may be calculated from the value detected by the corresponding rear resolver 34 (34L, 34R) or may be calculated by converting the value detected by the corresponding rear wheel speed sensor 36 (36L, 36R) into a motor angular speed. Similarly, the rotational speed of the front motor 5 may be calculated from the value detected by the front resolver 35, or may be calculated by converting the value detected by the front wheel speed sensor 37 (37L, 37R) into a motor angular speed.

Then, the first restricting unit 25A calculates the product of the first left demand torque T_{D1L} and the rotational speed of the rear left motor 4L, the product of the first right demand torque T_{D1R} and the rotational speed of the rear right motor 4R, and the product of the third demand torque T_{D3} and the rotational speed of the front motor 5. Then, the first restricting unit 25A calculates the total vehicle output by calculating the sum of these three products.

The first restricting unit 25A calculates the tolerance output range of the battery 10 based on the state data i_{BAT} obtained from the battery 10 or the BMU, and sets the first range R1 (left first range R1L, right first range R1R) and the third range R3 such that the total vehicle output does not deviate from the tolerance output range.

If the value of the first left demand torque T_{D1L} deviates from the left first range R1L, the first restricting unit 25A replaces the value with the upper limit value or the lower limit value of the left first range R1L and outputs the replaced value as the second left demand torque T_{D2L}. Similarly, if the value of the first right demand torque T_{D1R} deviates from the right first range R1R, the first restricting unit 25A replaces the value with the upper limit value or the lower limit value of the right first range R1R and outputs the replaced value as the second right demand torque T_{D2R}. If the value of the third demand torque T_{D3} deviates from the third range R3, the first restricting unit 25A replaces the value with the upper limit value or the lower limit value of the third range R3 and outputs the replaced value as the fourth demand torque T_{D4}.

On the other hand, if the first left demand torque T_{D1L} is within the left first range R1L, the first restricting unit 25A outputs, as the second left demand torque T_{D2L}, the unmodified first left demand torque T_{D1L}. Similarly, if the first right demand torque T_{D1R} is within the right first range R1R, the first restricting unit 25A outputs, as the second right demand torque T_{D2R}, the unmodified first right demand torque T_{D1R}. If the third demand torque T_{D3} is within the third range R3, the first restricting unit 25A outputs, as the fourth demand torque T_{D4}, the unmodified third demand torque T_{D3}. The second demand torque T_{D2} (T_{D2L}, T_{D2R}) is transmitted to the RrMCU 22A and the fourth demand torque T_{D4} is transmitted to the FrMCU 23.

The second arithmetic unit 27A performs the torque control like the second arithmetic unit 27 of the first embodiment. The second arithmetic unit 27A calculates, as the first instruction torque T_{I1}, a first left instruction torque T_{I1L} of the rear left motor 4L and a first right instruction torque T_{I1R} of the rear right motor 4R. The first left instruction torque T_{I1L} and the first right instruction torque T_{I1R} calculated by the second arithmetic unit 27A are transmitted to the second restricting unit 28A.

The second restricting unit 28A performs the battery protection control in the RrMCU 22A. The second restricting unit 28A may set, as the second range R2, a left second range R2L of the first left instruction torque T_{T1L} and the right second range R2R of the first right instruction torque T_{I1R}. The second restricting unit 28A outputs the second left instruction torque T_{I2L} obtained by restricting the first left instruction torque T_{I1L} within the second range R2 (left second range R2L), and outputs the second right instruction torque T_{I2R} obtained by restricting the first right instruction torque T_{I1R} within the second range R2 (right second range R2R). Like the first embodiment, the second range R2 (R2L, R2R) may be set to a range of zero or more and an upper limit value or less (where the upper limit value is larger than zero) when the first left instruction torque T_{I1L} (T_{T1L}, T_{T1R}) is a positive value, and may be set to a range of zero or less and a lower limit value or more (where the lower limit value is less than zero) when the first left instruction torque T_{I1L} (T_{T1L}, T_{T1R}) is a negative value.

In setting the second range R2 (R2L, R2R), the second restricting unit 28A calculates the total vehicle output using the sum of the product of the first left instruction torque T_{I1L} and the rotational speed of the rear left motor 4L and the product of the first right instruction torque T_{I1R} and the rotational speed of the rear right motor 4R. Specifically, the second restricting unit 28A calculates the total vehicle output based on the calculation logic illustrated in FIG. 4, like the first restricting unit 25A.

For example, the second restricting unit 28A substitutes the first left instruction torque T_{I1L} and the first right instruction torque T_{I1R} for the "torque of the RL motor 4L" and the "torque of the RR motor 4R" in FIG. 4, respectively. Further, the second restricting unit 28A substitutes the rotational speed of the rear left motor 4L and the rotational speed of the rear right motor 4R at that time point for the "Rotational Speed of RL Motor 4L" and the "Rotational Speed of RR Motor 4R" in FIG. 4, respectively. The rotational speed of each rear motor 4 may be calculated from the value detected by the corresponding rear resolver 34 (34L, 34R) or may be calculated by converting the value detected by the corresponding rear wheel speed sensor 36 (36L, 36R) into a motor angular speed.

Further, the second restricting unit 28A substitutes the torque (for example, the third demand torque T_{D3}) of the front motor 5 obtained from the superordinate ECU 21A and the rotational speed of the front motor 5 for the "Torque of F Motor 5" and the "Rotational Speed of F Motor 5" in FIG. 4, respectively. Alternatively, the second restricting unit 28A may directly obtain, as the "Torque of F Motor 5", the instruction torque of the front motor 5 from the FrMCU23 without using the superordinate ECU 21A, and may directly calculate the "Rotational Speed of F Motor 5" from a value detected by the front resolver 35 and/or the front wheel speed sensors 37 (37L, 37R).

Then, the second restricting unit 28A calculates the product of the first left instruction torque T_{I1L} and the rotational speed of the rear left motor 4L, the product of the first right instruction torque T_{I1R} and the rotational speed of the rear right motor 4R, and the product of the torque of the front motor 5 and the rotational speed of the front motor 5. The second restricting unit 28A calculates the total vehicle output by calculating the sum of these three products.

Thereafter, the second restricting unit 28A calculates the tolerance output range of the battery 10 from the state data i_{BAT} obtained via the superordinate ECU 21, and sets the second range R2 (left second range R2L, right second range R2R) such that the total vehicle output does not deviate from the tolerance output range. The second restricting unit 28A may obtain the state data i_{BAT} directly from the battery 10 or the BMU without using the superordinate ECU 21.

If the value of the first left instruction torque T_{I1L} deviates from the left second range R2L, the second restricting unit 28A replaces the value with the upper limit value or the lower limit value of the left second range R2L and outputs the replaced value as the second left instruction torque T_{I2L}. Similarly, if the value of the first right instruction torque T_{I1R} deviates from the right second range R2R, the second restricting unit 28A replaces the value with the upper limit value or the lower limit value of the right second range R2R and outputs the replaced value as the second right instruction torque T_{I2R}.

On the other hand, if the first left instruction torque T_{I1L} is within the left second range R2L, the second restricting unit 28A outputs, as the second left instruction torque T_{I2L}, the unmodified first left instruction torque T_{I1L}. Similarly, if the first right instruction torque T_{I1R} is within the right second range R2R, the second restricting unit 28A outputs, as the second right instruction torque T_{I2R}, the unmodified first right instruction torque T_{I1R}. The second left instruction torque T_{I2L} and the second right instruction torque T_{I2R} calculated as the second instruction torque T_{I2} are transmitted to the controlling unit 29A.

The controlling unit 29A controls the rear motors 4 to output the second instruction torque T_{I2} transmitted from the second restricting unit 28A. The controlling unit 29A controls the rear left motor 4L by driving the rear left inverter 6L to achieve the obtained second left instruction torque T_{I2L}, and controls the rear right motor 4R by driving the rear right inverter 6R to achieve the obtained second right instruction torque T_{I2R}.

### 2-4. Effects

The above-described control system 20A can obtain the same advantages as those of the control system 20 of the first embodiment. In other words, according to the above control system 20A, since the battery protection control is performed by both the superordinate ECU 21A and the FrMCU 22A, it is possible to appropriately control the rear motors 4 while protecting the battery 10.

In the above-described control system 20A, the second restricting unit 28A calculates the second instruction torque T_{I2} using the sum of the product of the first left instruction torque T_{I1L} and the rotational speed of the rear left motor 4L and the product of the first right instruction torque T_{I1R} and the rotational speed of the rear right motor 4R. This can appropriately calculate the total vehicle output of the vehicle 1A with a two-input two-output mechanism. Accordingly, since the second range R2 (R2L, R2R) can be set more appropriately, the battery 10 can be further appropriately protected.

Further, in the above-described control system 20A, the superordinate ECU 21A collectively calculates demand torque (second demand torque T_{D2} and fourth demand torque T_{D4}) of each of the rear motors 4 and the front motor 5 by incorporating the state of the battery 10. This can appropriately manage the electric power exchanged with the battery 10, so that the battery 10 can be further appropriately protected.

In addition, in the FrMCU23, as described above, the unmodified fourth demand torque T_{D4} transmitted from the superordinate ECU 21A is used as the instruction torque of the front motor 5, which is thereby controlled so as to output the fourth demand torque T_{D4}. In contrast, in the RrMCU 22A, since the torque control is executed, control that keeps the rear motors 4 at the calculated first instruction torque T_{I1} may cause the total vehicle output to deviate from the tolerance output range. However, in the above-described control system 20A, since the battery protection control is executed again in the second restricting unit 28A of the RrMCU 22A, the torque actually output from the rear motors 4 is suppressed from deviating from the second range R2. Therefore, the battery 10 can be more appropriately protected.

### 3. Third Embodiment

FIG. 5 is a block diagram illustrating a configuration of the control system 20B of the third embodiment in conjunction with a control logic implemented in the control system 20B. The control system 20B is applied to a vehicle 1B provided with a motor 4 and a generator 8. The control system 20B includes a superordinate ECU 21B and an MCU 22B, and has a function of controlling both the motor 4 and the generator 8.

The generator 8 has a function of generating electric power under the control of the control system 20B and supplying the generated electric power to the battery 10. The generator 8 is electrically connected to the battery 10 via a power generation inverter 9. The control system 20B controls the generator 8 by controlling the power generation inverter 9. Here, the generator 8 may be a motor-generator having both a function as a motor and a function as a generator. The vehicle 1B may be provided with a drive device (e.g., engine) that applies driving force required for power generation to the generator 8.

The control system 20B controls both the motor 4 and the generator 8 as described above. In addition to calculation of the first demand torque T_{D1} and the second demand torque T_{D2}, the superordinate ECU 21B performs power generation control to cause the generator 8 to generate electric power according to the second demand torque T_{D2}. That is, the control system 20B performs control that causes the generator 8 to previously generate electric power according to the second demand torque T_{D2} scheduled to be extracted from the motor 4.

In addition, when a slip of the wheel 2 is detected as the element data, the MCU 22B performs, as torque control, traction control that reduces the second demand torque T_{D2}. The MCU 22B calculates the second demand torque T_{D2} reduced in the traction control as a first instruction torque T_{I1}.

Here, in the superordinate ECU 21B, the above-described power generation control is performed. If the traction control is executed in the MCU 22B, the second demand torque T_{D2} which is reduced compared to the value calculated in the superordinate ECU 21B is calculated as the first instruction torque T_{I1}. As a result, the output to be actually used in the motor 4 comes to be less than the output (i.e., the output corresponding to the second demand torque T_{D2} calculated by the superordinate ECU 21B) grasped by the superordinate ECU 21B. Accordingly, the amount of electric power generated by the generator 8 becomes excessively large and the battery 10 is overcharged, which may lead to a malfunction (temperature rise or heat generation) of the battery 10.

As a solution to the above, in the control system 20B, the MCU 22B transmits a flag F indicating an execution state of the traction control and the second instruction torque T_{I2} to the superordinate ECU 21B. The flag F is a flag (signal) for identifying the execution state of the traction control, and is set to 0 at its default value and is set to 1 during the execution of the traction control. This means that the flag F set to 0 indicates that the execution state of the traction control is "not being executed" and the flag F set to 1 indicates that the execution state is "being executed".

If the flag F transmitted from the MCU 22B is 1, which means that the traction control is being executed in the MCU 22B, the superordinate ECU 21B causes the generator 8 to generate electric power according to the fed-back second instruction torque T_{I2} as the power generation control. This can keep an amount of generated electric power corresponding to the output actually used in the motor 4 and therefore excessive electric power generation can be prohibited, so that the battery 10 is protected.

In order to achieve the above-described calculation and control, the superordinate ECU 21B is provided with a first arithmetic unit 24, a first restricting unit 25B, and a power-generation controlling unit 26, and the MCU 22B is provided with a second arithmetic unit 27B, a second restricting unit 28, and a controlling unit 29.

The first restricting unit 25B performs the battery protection control like the first restricting unit 25 of the first embodiment. In the present embodiment, the second demand torque T_{D2} calculated by the first restricting unit 25B is transmitted to the MCU 22B and the power-generation controlling unit 26.

The power-generation controlling unit 26 performs the above-described power generation control. As the power generation control, the power-generation controlling unit 26 controls the generator 8 by driving the power generation inverter 9 to generate electric power corresponding to the second demand torque T_{D2} obtained from the first restricting unit 25B. If the second demand torque T_{D2} obtained from the first restricting unit 25B is a negative (i.e., if the torque indicates regenerative torque), the power-generation controlling unit 26 may determine that power generation by the generator 8 is not necessary, and may control the generator 8 not to operate. When the flag F transmitted from the MCU 22B is set to 1, the power-generation controlling unit 26 controls the generator 8 to generate electric power corresponding to the second instruction torque T_{I2} instead of the second demand torque T_{D2}.

The second arithmetic unit 27B performs the torque control like the second arithmetic unit 27 of the first embodiment. As described above, the second arithmetic unit 27B of the present embodiment performs, as the torque control, the traction control when a slip of the wheel 2 is detected. The amount by which the second demand torque T_{D2} is reduced in the traction control may be a constant value or a variable set based on, for example, the element data.

Known control conditions can be applied to detection of a slip of the wheel 2 (i.e., start condition and end condition for traction control). For example, when the difference between an actual wheel speed and a target wheel speed of the wheel 2 comes to be equal to or greater than a predetermined difference, the wheel 2 is determined to be slipping (i.e., a slip of the wheel 2 is detected). Then the traction control is started, and the flag F is set to 1. Further, for example, when the difference between an actual wheel speed and a target wheel speed of the wheel 2 comes to be less than the predetermined difference, the wheel 2 is determined to stop the slip and the flag F is set to 0. Except for the difference between an actual wheel speed and a target wheel speed of the wheel 2, the slip of the wheel 2 may be detected based on the actual slip ratio of wheel 2, the angular acceleration of the motor 4 calculated from the angular speed ω_{M} of the motor 4 detected by the resolver 34, the angular acceleration of the motor 4, or the angular acceleration of the wheel 2 calculated from the angular speed ω_{W} of the wheel 2 detected by the wheel speed sensor 36.

When a slip of the wheel 2 is detected, the second arithmetic unit 27B calculates, as the first instruction torque T_{I1}, the second demand torque T_{D2} reduced in the traction control. Alternatively, the second arithmetic unit 27B may calculate, as the first instruction torque T_{I1}, a value obtained by executing another torque control (e.g., the above-described vibration suppressing control, slip control, and yaw control) based on the reduced second demand torque T_{D2}. The traction control is not necessarily performed, and for example, if a slip of the wheel 2 is not detected, the second arithmetic unit 27B may calculate, as the first instruction torque T_{I1}, the unmodified second demand torque T_{D2} as a result of incorporating the element data as to whether the wheel 2 is slipping. Alternatively, the second arithmetic unit 27B may calculate, as the first instruction torque T_{I1}, a value obtained by executing another torque control based on the second demand torque T_{D2}.

The first instruction torque T_{I1} calculated by the second arithmetic unit 27B is transmitted to the second restricting unit 28. If the traction control is performed, since the traction control is performed on the positive second demand torque T_{D2} restricted within the first range R1, the first instruction torque T_{I1} calculated by the second arithmetic unit 27B is at least lower than the upper limit value Ru1 of the first range R1. For the above, the second restricting unit 28 does not replace the first instruction torque T_{I1} with the upper limit value Ru2 of the second range R2 and would output, as the second instruction torque T_{I2}, the unmodified first instruction torque T_{I1}.

The above-described control system 20B can obtain the same advantages as those of the control system 20 of the first embodiment. Specifically, according to the control system 20B described above, since the battery protection control is performed by both the superordinate ECU 21B and the MCU 22B, it is possible to appropriately control the motor 4 while protecting the battery 10.

In addition, in the above-described control system 20B, when a slip of the wheel 2 is detected as the element data, the second arithmetic unit 27B executes the traction control that reduces the second demand torque T_{D2}. In addition, the MCU 22B transmits the flag F indicating an execution state of the traction control and the second instruction torque T_{I2} to the superordinate ECU 21B. This makes the superordinate ECU 21B possible to manage the execution state of the traction control and the second instruction torque T_{I2}, so that battery 10 can be protected more appropriately.

In a normal operation while the MCU 22B is not executing the traction control, the power-generation controlling unit 26 controls, as the power generation control, the generator 8 to generate electric power corresponding to the second demand torque T_{D2}. On the other hand, if the traction control is executed, the power-generation controlling unit 26 controls the generator 8 to generate electric power corresponding to the fed-back second instruction torque T_{I2}. This can keep an amount of generated electric power corresponding to the output actually used in the motor 4 and therefore excessive electric power generation can be prohibited. Accordingly, the battery 10 can be suppressed from being overcharged and the battery 10 is protected.

### 4. Miscellaneous

The above embodiments are merely illustrative and are not intended to exclude the application of various modifications and techniques not explicitly described in the above embodiments. Each configuration of the embodiments can be variously modified and implemented without departing from the gist thereof. Also, each configuration of the embodiments can be selected or omitted according to the requirement, or can be combined appropriately.

Alternatively, the vehicle 1A of the second embodiment may omit the front motor 5. In this alternative, the FrMCU23 may be omitted, and the superordinate ECU 21A does not have to perform calculation related to the demand torque of the front motor 5. The second embodiment assumes that the left and right wheels 2 are the rear wheels, but the left and right wheels 2 may be the front wheels. Like the control system 20A, the control systems 20 and 20B may include a different subordinate control device that controls a second motor different from the motor 4 controlled by the MCUs 22 and 22B, respectively.

### [Industrial Applicability]

The present disclosure is applicable to industries of manufacturing a control system mounted on a vehicle and also to industries of manufacturing a vehicle provided with the control system.

### [Reference Signs List]

1,1A,1B Vehicle
2 Wheel, rear wheel (First one of front wheel and rear wheel)
2L Rear left wheel (Left and right wheels)
2R Rear right wheel (Left and right wheels)
3 Front wheel (Second one of front wheel and rear wheel)
4 Motor, Rear motor (Motor, First motor)
4L Rear left motor (Motor, Left motor)
4R Rear right motor (Motor, Right motor)
5 Front motor (Second motor)
8 Generator (Generator)
10 Battery
11 Power distribution mechanism (Differential mechanism)
20,20A,20B Control system (Vehicle control system)
21,21A,21A Superordinate ECU (Superordinate control device)
22,22A,22B MCU, RrMCU (Subordinate control device)
23 FrMCU (Different subordinate control device)
24,24A First arithmetic unit
25,25A,25B First restricting unit
26 Power-generation controlling unit
27,27A,27B Second arithmetic unit
28,28A Second restricting unit
29,29A Controlling unit
T_{D1} First demanded torque
T_{D2} Second demanded torque
T_{D3} Third demanded torque
T_{D4} Fourth demanded torque
T_{I1} First instruction torque
T_{I1L} First left instruction torque (left instruction torque)
T_{I1R} First right instruction torque (right instruction torque)
T_{I2} Second instruction torque
R1 First range
R2 Second range
R3 Third range

## Claims

1. A vehicle control system for a vehicle comprising a battery and a motor that drives a wheel using electric power of the battery, the vehicle control device comprising:
a superordinate control device comprising
a first arithmetic unit that calculates a first demand torque based on operation data of the vehicle, the first demand torque being a demand torque required for the motor, and
a first restricting unit that outputs a second demand torque obtained by restricting the first demand torque within a first range set based on a state of the battery; and
a subordinate control device comprising
a second arithmetic unit that calculates an instruction torque of the motor as a first instruction torque by incorporating element data of one or more elements on a power transmission path from the motor to the wheel into the second demand torque,
a second restricting unit that calculates a second instruction torque obtained by restricting the first instruction torque within a second range set based on the state of the battery, and
a controlling unit that controls the motor such that the motor outputs the second instruction torque.

2. The vehicle control system according to claim 1, wherein
the vehicle further comprises a differential mechanism that applies a torque difference to a left wheel and a right wheel serving as two of the wheels, and a left motor and a right motor that is each connected to the differential mechanism and that each serves as the motor,
the second arithmetic unit calculates, as the first instruction torque, a left instruction torque of the left motor and a right instruction torque of the right motor, and
the second restricting unit calculates the second instruction torque using a product of the left instruction torque and a rotational speed of the left motor and a product of the right instruction torque and a rotational speed of the right motor.

3. The vehicle control system according to claim 1, wherein
the vehicle further comprises a generator that supplies generated electric power to the battery,
the superordinate control device further comprises a power-generation controlling unit that causes the generator to generate electric power according to the second demand torque,
the second arithmetic unit executes, when a slip of the wheel is detected as the element data, traction control that reduces the second demand torque, and
the subordinate control device transmits an execution state of the traction control and the second instruction torque to the superordinate control device.

4. The vehicle control system according to claim 3, wherein
the power-generation controlling unit causes, when the traction control is executed, the generator to generate electric power according to the second instruction torque.

5. The vehicle control system according to any one of claims 1-4, wherein
the motor is a first motor that drives a first one of a front wheel and a rear wheel of the vehicle,
the vehicle further comprises a second motor that is different from the first motor controlled by the subordinate control device and that drives a second one of the front wheel and the rear wheel using the electric power of the battery,
the vehicle control system further comprises a different subordinate control device that controls the second motor,
the first arithmetic unit calculates, based on the operation data, the first demand torque and a third demand torque, the third demand torque being a demand torque required for the second motor,
the first restricting unit outputs a fourth demand torque obtained by restricting the third instruction torque within a third range set based on the state of the battery, and
the different subordinate control device controls the second motor such that the second motor outputs the fourth demand torque.

6. A vehicle control method for a vehicle comprising a battery, a motor that drives a wheel using electric power of the battery, a superordinate control device that calculates a demand torque required for the motor, and a subordinate control device that calculates an instruction torque of the motor, the method comprising:
at the superordinate control device,
calculating a first demand torque based on operation data of the vehicle, the first demand torque being the demand torque required for the motor;
outputting a second demand torque obtained by restricting the first demand torque within a first range set based on a state of the battery;
at the subordinate control device,
calculating an instruction torque of the motor as a first instruction torque by incorporating element data of one or more elements on a power transmission path from the motor to the wheel into the second demand torque;
calculating a second instruction torque obtained by restricting the first instruction torque within a second range set based on the state of the battery; and
controlling the motor such that the motor outputs the second instruction torque.
